# EUROPEAN PATENT APPLICATION

(11) **EP 4 231 702 A1**
(43) Date of publication of application: **23.08.2023**
(21) Application number: 21879328.9
(22) Date of filing: 11.10.2021
(51) Int. Cl.: H04W 28/10, H04W 24/02

(54) **DATA TRANSMISSION METHOD, CONFIGURATION METHOD, TERMINAL, AND NETWORK DEVICE**

(30) Priority: 13.10.2020 CN 202011090094
(71) Applicant: Datang Mobile Communications Equipment Co., Ltd., Beijing 100085 (CN)
(72) Inventor: CHEN, Li, Beijing 100085 (CN); BERTRAND, Pierre, Beijing 100085 (CN)
(74) Representative: dompatent von Kreisler Selting Werner - Partnerschaft von Patent- und Rechtsanwälten mbB
(86) International application number: PCT/CN2021/123042
(87) International publication number: WO 2022/078284

(57) **Abstract**

A data communications method, a configuration method, a terminal and a network device are disclosed. The data communications method performed by the terminal side includes: increasing, in a case that a data transmission error of a service occurs, a priority of a data transmission for the service according to a trigger condition; and performing the data transmission for the service according to the improved priority of the data transmission for the service.

## Description

### CROSS REFERENCE OF RELATED APPLICATION

The present application claims a priority of Chinese patent application No. 202011090094.8 filed on October 13, 2020, which is incorporated herein by reference in its entirety.

### TECHNICAL FIELD

The present disclosure relates to the technical field of communications, and in particular, to a data communications method and a configuration method, a terminal and a network device.

### BACKGROUND

Both 4G and 5G are scheduling-based systems, and resource allocation is performed for both downlink and uplink data transmissions based on base station scheduling. When performing resource scheduling, a base station maps QoS flow (QoS flow) of service data to a data radio bearer (Data Radio Bearer, DRB) on the radio access network (Radio Access Network, RAN) side according to the Quality of Service (Quality of Service, QoS) information obtained when the service is established, and configures, based on the QoS characteristics of the QoS flow mapped on the each DRB, a transmission parameter for each DRB, which includes logical channel configuration, and whether to perform packet data control protocol (Packet Data Protocol, PDCP) repeated transmission, etc.

According to related technologies, the QoS guarantee degree of a bearer for all data packets is the same, that is, after the first data packet is lost, subsequent data packets may continue to be lost, resulting in the unavailability of the entire transmission link.

### SUMMARY

Embodiments of the present disclosure provide a data communications method and a configuration method, a terminal and a network device, which solve the problems on how to ensure the service transmission availability in the industrial Internet and realize the effective transmission of service data.

In order to solve the above-mentioned technical problems, embodiments of the present disclosure provide the following technical solutions:

a data communications method, performed to a terminal, where the method includes: improving, in a case that a data transmission error of a service occurs, a priority of a data transmission for the service according to a trigger condition; and perform the data transmission for the service according to the improved priority of the data transmission for the service.

Optionally, the data transmission error of the service is determined for data in at least one of a quality of service flow (QoS flow), a radio bearer (RB), or a logical channel.

Optionally, the data transmission error of the service is determined under at least one of the following conditions that:
physical layer hybrid automatic repeat request (HARQ) error occurs in data in at least one of a quality of service flow (QoS flow), a radio bearer (RB), or a logical channel;
radio link control automatic repeat request (RLC ARQ) error occurs; or
the terminal recognizes that all or part of segments of radio link control service data unit (RLC SDU) are not successfully received.

Optionally, the trigger condition is determined according to at least one of the following conditions of: a manner stipulated in an agreement; a manner that the terminal makes its own decisions; or a manner configured by a network side.

Optionally, the improving the priority of the data transmission for the service includes at least one of the following:
receiving, by the terminal, first configuration information sent by a network side, and improving the priority of the data transmission for the service according to the first configuration information, where the first configuration information is used for configuring a quality of service flow (QoS flow), a radio bearer (RB), or a logical channel that allows to improve the priority of the data transmission for the service;
receiving, by the terminal, second configuration information sent by the network side, and improving the priority of the data transmission for the service according to the second configuration information, where the second configuration information is used to allow the terminal to improve, in a case that the data transmission error of the service occurs in a specified logical channel, a priority parameter in configuration of the logical channel to a highest priority or a specified priority;
receiving, by the terminal, third configuration information sent by the network side, and improving the priority of the data transmission for the service according to the third configuration information, where the third configuration information is used to allow the terminal to ignore, in a case that the data transmission error of the service occurs in a specified logical channel, at least one of logical channel restrictions in a logical channel priority configuration of the logical channel;
receiving, by the terminal, fourth configuration information sent by the network side, and improving the priority of the data transmission for the service according to the fourth configuration information, where the fourth configuration information is used to allow the terminal to improve, in a case that the data transmission error of the service occurs in a specified logical channel, a priority of media access control packet data unit (MAC PDU) mapped by data in the logical channel to the highest priority or the specified priority in a subsequent transmission, when a resource conflict occurs in uplink transmissions;
receiving, by the terminal, fifth configuration information sent by the network side, and improving the priority of the data transmission for the service according to the fifth configuration information, where the fifth configuration information is used to set, in a case that the data transmission error of the service occurs in the terminal, a physical layer priority corresponding to a specified configured resource (CG) to a higher priority for the specified configured resource (CG);
receiving, by the terminal, sixth configuration information sent by the network side, and improving the priority of the data transmission for the service according to the sixth configuration information, where the sixth configuration information is used to allow the terminal to improve, in a case that the data transmission error of the service occurs in a specified logical channel, a physical layer priority corresponding to the logical channel to a higher priority, and the physical layer priority is used for specifying, in a case that a transmission resource conflict occurs in uplink transmissions, to preferentially perform one of the transmissions with the higher priority;
receiving, by the terminal, at least two sets of logical channel parameters configured by the network side for a preset logical channel, and using, in a case that no transmission error occurs, the logical channel configuration parameter with a lower priority among the at least two sets of logical channel parameters; and using, in a case that the data transmission error of the service occurs in the terminal, the logical channel configuration parameter with a higher priority among the at least two sets of logical channel parameters for transmission.

An embodiment of the present disclosure also provides a configuration method for data communications, which is performed by a network side, and the method includes: sending configuration information to a terminal, where the configuration information is used for the terminal to improve, in a case that an error of a service data transmission occurs, a priority of a data transmission for the service according to the configuration information and a trigger condition, and to perform the data transmission for the service according to the improved priority of the data transmission for the service.

Optionally, the data transmission error of the service is determined for data in at least one of a quality of service flow (QoS flow), a radio bearer (RB), or a logical channel.

Optionally, the trigger condition is determined according to at least one of the following conditions of: a manner stipulated in an agreement; a manner that the terminal makes its own decisions; or a manner configured by a network side.

Optionally, in a case that the trigger condition is determined according to the manner configured by the network side, the method further includes:
sending parameters for determining the data transmission error of the service to the terminal, where the parameters include at least one of the following:
sending a parameter for determining the data transmission error of the service to the terminal, where the parameter includes at least one of the following:
the quantity of consecutive hybrid automatic repeat request negative acknowledgements (HARQ NACKs) occurred to data in a logical channel;
the quantity of radio link control (RLC) packet data units (PDUs) and/or the quantity of bytes indicated by a radio link control automatic repeat request negative acknowledgement (RLC ARQ NACK);
the quantity of radio link control service data units (RLC SDUs) that are not successfully received, or the quantity of RLC SDUs that are not successfully received within a configured time period; or
the quantity of gaps that appear after packet data convergence protocol (PDCP) is reordered; and
configuring a trigger timer, where the timer starts after the data transmission error of the service occurs, and in a case that there is still the data transmission error of the service after the timer expires, it is considered that the trigger condition for improving the priority of the data transmission for the service is met.

Optionally, the sending configuration information to the terminal includes at least one of the following of:
sending first configuration information to the terminal, where the first configuration information is used for configuring a quality of service flow (QoS flow), a radio bearer (RB), or a logical channel that allows to improve the priority of the data transmission for the service;
sending second configuration information to the terminal, where the second configuration information is used to allow the terminal to improve, in a case that the data transmission error of the service occurs in a specified logical channel, a priority parameter in configuration of the logical channel to a highest priority or a specified priority;
sending third configuration information to the terminal, where the third configuration information is used to allow the terminal to ignore, in a case that the data transmission error of the service occurs in the specified logical channel, at least one of logical channel restrictions in a logical channel priority configuration of the logical channel;
sending fourth configuration information to the terminal, where the fourth configuration information is used to allow the terminal to improve, in a case that the data transmission error of the service occurs in the specified logical channel, a priority of media access control packet data unit (MAC PDU) mapped by the data in the logical channel to the highest priority or the specified priority in a subsequent transmission, when a resource conflict occurs in uplink transmissions;
sending fifth configuration information to the terminal, where the fifth configuration information is used to set, in a case that the data transmission error of the service occurs in the terminal, a physical layer priority corresponding to a specified configured resource (CG) to a higher priority for the specified configured resource (CG);
sending sixth configuration information to the terminal, where the sixth configuration information is used to allow the terminal to improve, in a case that the data transmission error of the service occurs in the specified logical channel, a physical layer priority corresponding to the logical channel to a higher priority, and the physical layer priority is used for specifying, in a case that a transmission resource conflict occurs in uplink transmissions, to preferentially perform one of the transmissions with the higher priority; or
configuring at least two sets of logical channel parameters for the terminal preset logical channel, and using, in a case that no transmission error occurs, the logical channel configuration parameter with a lower priority among the at least two sets of logical channel parameters; and using, in a case that the data transmission error of the service occurs in the terminal, the logical channel configuration parameter with a higher priority among the at least two sets of logical channel parameters for transmission.

An embodiment of the present disclosure also provides a terminal, including: a transceiver, a processor, and a memory, where a program executable by the processor is stored in the memory. The processor, when executing the program, is configured to: improve, in a case that a data transmission error of a service occurs, a priority of a data transmission for the service according to a trigger condition; and perform the data transmission for the service according to the improved priority of the data transmission for the service.

Optionally, the improving the priority of the data transmission for the service includes at least one of the following of:
receiving, by the terminal, first configuration information sent by a network side, and improving the priority of the data transmission for the service according to the first configuration information, where the first configuration information is used for configuring a quality of service flow (QoS flow), a radio bearer (RB), or a logical channel that allows to improve the priority of the data transmission for the service;
receiving, by the terminal, second configuration information sent by the network side, and improving the priority of the data transmission for the service according to the second configuration information, where the second configuration information is used to allow the terminal to improve, in a case that the data transmission error of the service occurs in a specified logical channel, a priority parameter in configuration of the logical channel to a highest priority or a specified priority;
receiving, by the terminal, third configuration information sent by the network side, and improving the priority of the data transmission for the service according to the third configuration information, where the third configuration information is used to allow the terminal to ignore, in a case that the data transmission error of the service occurs in a specified logical channel, at least one of logical channel restrictions in a logical channel priority configuration of the logical channel;
receiving, by the terminal, fourth configuration information sent by the network side, and improving the priority of the data transmission for the service according to the fourth configuration information, where the fourth configuration information is used to allow the terminal to improve, in a case that the data transmission error of the service occurs in a specified logical channel, a priority of media access control packet data unit (MAC PDU) mapped by data in the logical channel to the highest priority or the specified priority in a subsequent transmission, when a resource conflict occurs in uplink transmissions;
receiving, by the terminal, fifth configuration information sent by the network side, and improving the priority of the data transmission for the service according to the fifth configuration information, where the fifth configuration information is used to set, in a case that the data transmission error of the service occurs in the terminal, a physical layer priority corresponding to a specified configured resource (CG) to a higher priority for the specified configured resource (CG);
receiving, by the terminal, sixth configuration information sent by the network side, and improving the priority of the data transmission for the service according to the sixth configuration information, where the sixth configuration information is used to allow the terminal to improve, in a case that the data transmission error of the service occurs in a specified logical channel, a physical layer priority corresponding to the logical channel to a higher priority, and the physical layer priority is used for specifying, in a case that a transmission resource conflict occurs in uplink transmissions, to preferentially perform one of the transmissions with the higher priority;
receiving, by the terminal, at least two sets of logical channel parameters configured by the network side for a preset logical channel, and using, in a case that no transmission error occurs, the logical channel configuration parameter with a lower priority among the at least two sets of logical channel parameters; and using, in a case that the data transmission error of the service occurs in the terminal, the logical channel configuration parameter with a higher priority among the at least two sets of logical channel parameters for transmission.

An embodiment of the present disclosure also provides a data transmission apparatus, applied to a terminal. The apparatus includes: a processing module, configured to improve, in a case that a data transmission error of a service occurs, a priority of a data transmission for the service according to a trigger condition; and a transceiver module, configured to perform the data transmission for the service according to the improved priority of the data transmission for the service.

An embodiment of the present disclosure also provides a network device, including: a transceiver, a processor, and a memory, where a program executable by the processor is stored in the memory; the processor executes the program to: send configuration information to a terminal, where the configuration information is used for the terminal to improve, in a case that an error of a service data transmission occurs, a priority of a data transmission for the service according to the configuration information and a trigger condition, and to perform the data transmission for the service according to the improved priority of the data transmission for the service.

Optionally, the sending configuration information to the terminal includes at least one of the following of:
sending first configuration information to the terminal, where the first configuration information is used for configuring a quality of service flow (QoS flow), a radio bearer (RB), or a logical channel that allows to improve the priority of the data transmission for the service;
sending second configuration information to the terminal, where the second configuration information is used to allow the terminal to improve, in a case that the data transmission error of the service occurs in a specified logical channel, a priority parameter in configuration of the logical channel to a highest priority or a specified priority;
sending third configuration information to the terminal, where the third configuration information is used to allow the terminal to ignore, in a case that the data transmission error of the service occurs in the specified logical channel, at least one of logical channel restrictions in a logical channel priority configuration of the logical channel;
sending fourth configuration information to the terminal, where the fourth configuration information is used to allow the terminal to improve, in a case that the data transmission error of the service occurs in the specified logical channel, a priority of media access control packet data unit (MAC PDU) mapped by the data in the logical channel to the highest priority or the specified priority in a subsequent transmission, when a resource conflict occurs in uplink transmissions;
sending fifth configuration information to the terminal, where the fifth configuration information is used to set, in a case that the data transmission error of the service occurs in the terminal, a physical layer priority corresponding to a specified configured resource (CG) to a higher priority for the specified configured resource (CG);
sending sixth configuration information to the terminal, where the sixth configuration information is used to allow the terminal to improve, in a case that the data transmission error of the service occurs in the specified logical channel, a physical layer priority corresponding to the logical channel to a higher priority, and the physical layer priority is used for specifying, in a case that a transmission resource conflict occurs in uplink transmissions, to preferentially perform one of the transmissions with the higher priority; or
configuring at least two sets of logical channel parameters for the terminal preset logical channel, and using, in a case that no transmission error occurs, the logical channel configuration parameter with a lower priority among the at least two sets of logical channel parameters; and using, in a case that the data transmission error of the service occurs in the terminal, the logical channel configuration parameter with a higher priority among the at least two sets of logical channel parameters for transmission.

An embodiment of the present disclosure also provides a configuration apparatus for data transmission, applied to a network device, where the apparatus includes: a transceiver module, configured to send configuration information to a terminal, where the configuration information is used for the terminal to improve, in a case that a data transmission error of a service occurs, a priority of a data transmission for the service according to a trigger condition; and perform the data transmission for the service according to the improved priority of the data transmission for the service.

An embodiment of the present disclosure also provides a processor-readable storage medium, where the processor-readable storage medium stores processor-executable instructions, and the processor-executable instructions are used for enabling the processor to perform the above-mentioned method.

The beneficial effects of the embodiments of the present disclosure are as follows.

In the above-mentioned embodiments of the present disclosure, in a case that a data transmission error of a service occurs, a priority of a data transmission for the service is improved according to a trigger condition; and the data transmission for the service is performed according to the improved priority of the data transmission for the service. Therefore, it is ensured that the correct transmission of the service data is completed before the survival time expires, and the availability of the communications link is guaranteed.

### BRIEF DESCRIPTION OF THE DRAWINGS

FIG. 1 is a schematic view of a survival time timer;
FIG. 2 is a flowchart of a data communications method performed by a terminal side;
FIG. 3 is a flowchart of a configuration method for data communications performed by a network side;
FIG. 4 is a schematic structural diagram of a terminal provided in the present disclosure; and
FIG. 5 is a block schematic diagram of a data transmission processing apparatus provided in the present disclosure.

### DETAILED DESCRIPTION

Exemplary embodiments of the present disclosure will be described in more detail below with reference to the drawings. Although the exemplary embodiments of the present disclosure are shown in the drawings, it should be understood that the present disclosure may be embodied in various forms and should not be limited by the embodiments set forth herein. Rather, these embodiments are provided for more thorough understanding of the present disclosure and to fully convey the scope of the present disclosure to those skilled in the art.

In the following embodiments of the present disclosure, the parameters used for QoS guarantee in logical channel configuration include:
Priority, where a decreasing parameter value indicates a higher priority level;
allowedServingCells, allowed cells for data transmission of a logical channel;
allowedSCS-List, allowed subcarrier spacing(s) for data transmission of a logical channel;
maxPUSCH-Duration, the maximum PUSCH duration that is allowed for data transmission of a logical channel, where a terminal can map data of the logical channel to PUSCH only when a time length of a resource of the uplink PUSCH allocated by a base station is not greater than this parameter;
configuredGrantType1Allowed, whether to allow the use of pre-configured resource of configuration resource type 1;
allowedCG-List: a list of pre-configured resource groups that are allowed to be used.

Intra-UE priority, in a case that the terminal obtains two or more uplink transmission resources overlapping in the time domain (that is, uplink resources conflict), the terminal can only send uplink data on one of the uplink resources. Therefore, intra-UE priority can guarantee the transmission of high-priority services.

Intra-UE priority includes MAC layer priority and physical layer priority.

The basic idea of MAC layer priority means that in a case that the base station configures logical channel-based priority (lch-BasedPrioritization) for the terminal, and two uplink resources conflict, the terminal compares the logical channel priorities of the data mapped to the two uplink resources, and preferentially transmits the uplink resource including the logical channel data with the higher priority.

The physical layer priority refers to, for a pre-configured resource: the base station configures the physical layer priority phy-PriorityIndex of the pre-configured resource in the pre-configured resource CG configuration (ConfiguredGrantConfig) for the terminal as p0 or p1, where p0 indicates low priority, p1 indicates high priority; for dynamic scheduling resource, the base station configures the priority allowedPHY-PriorityIndex of the corresponding uplink resource in the logical channel configuration (LogicalChannelConfig), and a dynamic scheduling command for scheduling uplink resource of the base station includes the priority indication p0 or p1 of the dynamic scheduling resource, logical channel data is only allowed to be mapped to uplink dynamic scheduling resource of corresponding priority. A priority indication is carried in the dynamic scheduling command of the base station, in a case that two uplink resources conflict, only the uplink transmission is allowed to be sent on the uplink resource with higher priority.

The above-mentioned logical channel prioritization and transmission priority are configured for determined services. As long as the above-mentioned parameters are not reconfigured for the data of a service, the QoS guarantee strength of each service data packet is the same, that is, it has the same performance parameter budgets such as latency and reliability.

The concept of survival time has been introduced in the Industrial Internet, and this parameter is used to characterize the availability of services. In the Industrial Internet, the service requirement parameters of some periodic deterministic communications services are as follows. In addition to traditional parameters such as transfer interval, message size, and delay, survival time is introduced.

**Table 1: Periodic deterministic communications service performance requirements**

| **Characteristic parameter** | | | | **Influence quantity** | | | | | | |
|---|---|---|---|---|---|---|---|---|---|---|
| **Communicat ions service availability: target value (note 1)** | **Communi cations service reliability: mean time between failures** | **End-to-e nd latency: maximu m (note 2)** (note 12a) | **Service bit rate: user experience d data rate** (note 12a) | **Messa ge size [byte]** (note 12a) | **Transfer interval: target** value (note 12a) | **Survival time** (note 12a) | **UEspeed** (note 13) | # **of UEs** | **Service area (note 3)** | **Remarks** |
| 99,999% to 99,99999% | ∼ 10 years | <transfer interval value | - | 50 | 500µs | 500µs | <75km/h | <20 | 50m x 10m x 10m | Motion control (A.2.2.1) |
| 99,9999% to 99,999999% | ∼ 10 years | <transfer interval value | - | 40 | 1ms | 1ms | <75km/h | ≤50 | 50m x 10m x 10m | Motion control (A.2.2.1) |
| 99,9999% to 99,999999% | ∼ 10 years | <transfer interval value | - | 20 | 2ms | 2ms | <75km/h | ≤100 | 50m x 10m x 10m | Motion control (A.2.2.1) |
| 99,9999% | - | <5ms | 1 kbit/s (steady state) 1, 5 Mbit/s (fault case) | <1500 | <60s (steady state)>_ 1 ms (fault case) | TBD | stationar y | 20 | 30km x 20km | Electrical Distribution - Distributed automated switching for isolation and service restoration (A.4.4); (note 5) |
| 99,9999% to 99,999999% | ∼ 10 years | < transfer interval value | | 1k | ≤10ms | 10 ms | - | 5b to 10 | 100 m x 30 m x 10 m | Control-to-c ontrol in motion control (A.2.2.2); (note 9) |

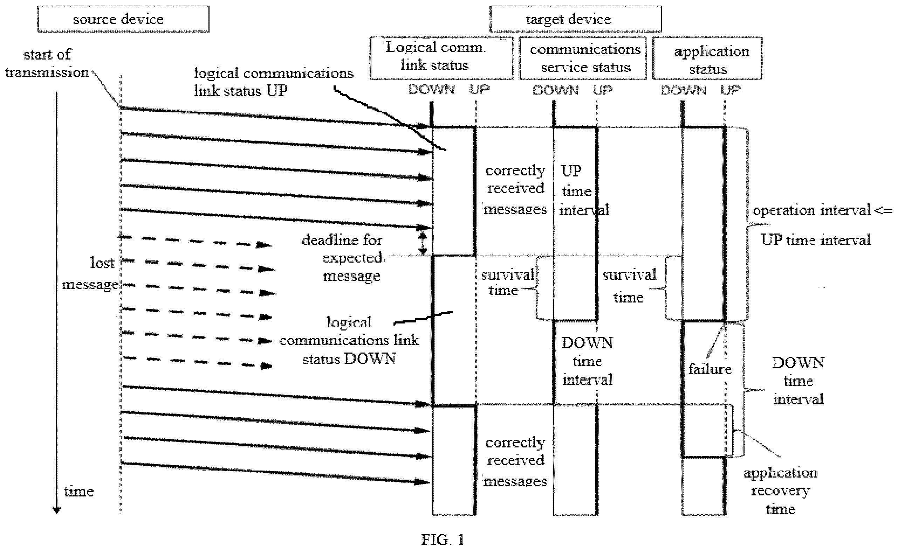

The definition of survival time is shown in FIG. 1. When an error of data transmission occurs, the survival time is started. If the subsequent data can be transmitted correctly during the validity period of the survival time, the service transmission is considered to be an availability (availability). If the survival time expires, the data still cannot be transmitted correctly, the transmission between the source device and the target device is considered to be unavailable.

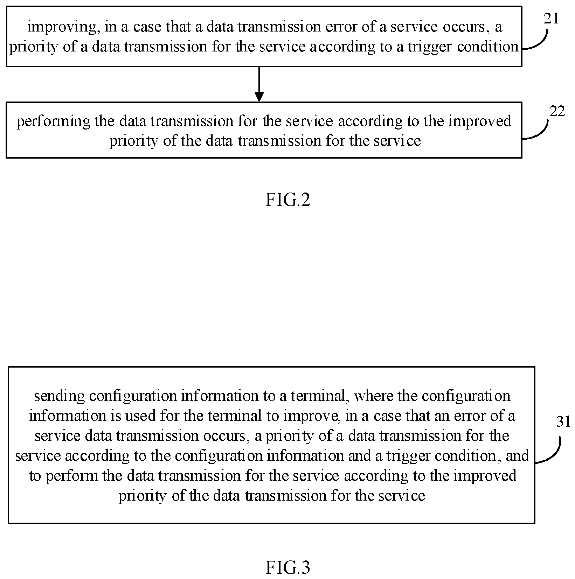

As shown in FIG. 2, an embodiment of the present disclosure provides a data communications method, performed by a terminal, and the method includes:
step 21, improving, in a case that a data transmission error of a service occurs, a priority of a data transmission for the service according to a trigger condition; and
step 22, performing the data transmission for the service according to the improved priority of the data transmission for the service.

In this embodiment of the present disclosure, when a data transmission error of a service occurs, the terminal improves the transmission priority of the service data to reduce the occurred unavailable probability of transmission link, thereby improving the overall service data transmission feasibility in the industrial Internet.

In an optional embodiment of the present disclosure, the data transmission error of the service is determined for data in at least one of a quality of service flow (QoS flow), a radio bearer (RB), or a logical channel.

In an optional embodiment of the present disclosure, the data transmission error of the service is determined under at least one of the following conditions that:
physical layer hybrid automatic repeat request (HARQ) error (HARQ NACK) occurs in data in at least one of a quality of service flow (QoS flow), a radio bearer (RB), or a logical channel;
radio link control automatic repeat request (RLC ARQ) error (RLC ARQ NACK) occurs; or
the terminal recognizes that all or part of segments of radio link control service data unit (RLC SDU) (that is PDCP PDU) are not successfully received. The "transmission error occurred in the terminal" mentioned below refers to the data transmission error for the corresponding service.

In an optional embodiment of the present disclosure, the trigger condition is determined according to at least one of the following conditions of:
a manner agreed in agreement protocol;
a manner that the terminal makes its own decisions; or
a manner configured by a network side.

In a case that the trigger condition is determined according to the manner configured by the network side, where the parameter configured by the network side include at least one of the following items:
the quantity of consecutive hybrid automatic repeat request negative acknowledgements (HARQ NACKs) occurred to the data in the logical channel;
the quantity of radio link control (RLC) packet data units (PDUs) and/or the quantity of bytes indicated by a radio link control automatic repeat request negative acknowledgement (RLC ARQ NACK);
the quantity of radio link control service data units (RLC SDUs) that are not successfully received, or the quantity of RLC SDUs that are not successfully received within a configured time period; or
the quantity of gaps that appear after packet data convergence protocol (PDCP) is reordered; and
configuring a trigger timer, where the timer starts after the data transmission error of the service occurs, and in a case that there is still the data transmission error of the service after the timer expires, it is considered that the trigger condition for improving the priority of the data transmission for the service is met.

In an optional embodiment of the present disclosure, the improving the priority of the data transmission for the service includes at least one of the following items:
(1) the terminal receives first configuration information sent by a network side, and improves the priority of the data transmission for the service according to the first configuration information, where the first configuration information is used for configuring a quality of service flow (QoS flow), a radio bearer (RB), or a logical channel that allows to improve the priority of the data transmission for the service;

In this embodiment, the network side (such as base station) configuration allows the terminal to improve the transmission priority (such as boostPriorityAllowed) for a specific service (for QoS flow or RB or logical channel configuration).

In an implementation example, the base station allows to improve the priority, and the terminal implements it by itself;
the base station configuration allows to improve priority parameters (such as boostPriorityAllowed) for QoS flow or RB or logical channel configuration; optionally, a trigger condition for error of service data transmission is configured by the base station.

The terminal receives the configuration parameters of the base station for service priority promotion; judges that a transmission error has occurred according to the base station configuration or protocol regulations or on its own decision; and performs preferentially the subsequent data transmission of the QoS flow or RB or logical channel. The specific method of transmission depends on the implementation of the terminal, and the base station does not make regulations.

(2) the terminal receives second configuration information sent by the network side, and improves the priority of the data transmission for the service according to the second configuration information, where the second configuration information is used to allow the terminal to improve, in a case that the data transmission error of the service occurs in a specified logical channel, a priority parameter in configuration of the logical channel to a highest priority or a specified priority;

In this embodiment, the network side (such as base station) configuration allows the terminal to improve, in a case that transmission error occurs, the priority parameter in the logical channel configuration to the highest priority or the specified priority, and perform, in a case that the terminal performs data mapping to the MAC PDU, the mapping according to a new priority.

In an implementation example, the logical channel priority is improved, and the logical channel data is preferentially mapped to an uplink resource. The base station configuration allows to improve the logical channel priority for a specific logical channel. Optionally, the promoted logical channel priority is specified, for example, if the original logical channel priority is 3, it can be promoted to 2; if not specified, it can be directly promoted to the highest logical channel priority 1. Optionally, a trigger condition when the error of service data transmission is configured by the base station.

The terminal receives the configuration of the base station for improving the logical channel priority; judges that a transmission error has occurred according to the base station configuration or protocol regulations or on its own decision; improves the priority of the logical channel that the transmission error occurs, and uses, in a case that MAC PDU is organized, the updated logical channel priority to perform the process of mapping data to uplink resource.

(3) The terminal receives third configuration information sent by the network side, and improves the priority of the data transmission for the service according to the third configuration information, where the third configuration information is used to allow the terminal to ignore, in a case that the data transmission error of the service occurs in the specified logical channel, at least one of logical channel restrictions in a logical channel priority configuration of the logical channel.

In this embodiment, the network side (such as base station) configuration allows, in a case that the transmission error occurs in the terminal, to ignore one or more or all of the logical channel restrictions, these logical channel restrictions include: allowedServingCells, allowedSCS-List, maxPUSCH-Duration, configuredGrantType1Allowed, allowedCG-List, where the ignoring logical channel restrictions means that these restriction conditions do not take effect (i.e. become invalid).

For example, the invalidation of allowedServingCells indicates that this logical channel can be transmitted under all available cells of the terminal; the invalidation of allowedSCS-List indicates that the available SCS is not restricted, and the data of this logical channel can be transmitted on the resource allocation of any subcarrier spacing; the invalidation of maxPUSCH-Duration indicates that the logical channel data can be transmitted on the PUSCH resource with any length; the invalidation of configuredGrantTypelAllowed indicates that the logical channel can use resources configured by pre-configured resource type 1; the invalidation of allowedCG-List indicates that the logical channel can use any pre-configured resources.

In an implementation example, the logical channel restriction is loosen: the base station configuration allows, in a case that the transmission error occurs in the terminal, to ignore one or more or all of the logical channel restrictions, these logical channel restrictions include: allowedServingCells, allowedSCS-List, maxPUSCH-Duration, configuredGrantType1Allowed, allowedCG-List. Optionally, a trigger condition for error of service data transmission is configured by the base station.

The terminal receives the configuration of the base station for relaxing the logical channel restrictions; judges that a transmission error has occurred according to the base station configuration or protocol regulations or on its own decision; and performs, in a case that MAC PDU is organized, the process of mapping data to uplink resource regardless of the restriction condition that the base station configuration determines to relax.

(4) The terminal receives fourth configuration information sent by the network side, and improves the priority of the data transmission for the service according to the fourth configuration information, where the fourth configuration information is used to allow the terminal to improve, in a case that the data transmission error of the service occurs in the specified logical channel, a priority of media access control packet data unit (MAC PDU) mapped by the logical channel data to the highest priority or the specified priority in a subsequent transmission, in a case that a resource conflict occurs in uplink transmissions.

In this embodiment, for the MAC layer intra-UE priority scheme, the base station configuration allows to improve, in a case that the transmission error occurs in the terminal, the priority of the corresponding logical channel to the highest level (for example, priority=3 is improved to 1) or a specified level (for example, priority= 3 is improved to 2), as the criterion for determining the transmission of conflicting uplink resources, here, the logical channel priority when the terminal maps the logical channel data to the MAC PDU is not changed.

In an implementation example, the MAC layer priority when uplink resource conflict is increased. The base station configuration allows to improve the logical channel priority during the priority judgement in the UE for a specific logical channel, optionally, the promoted logical channel priority is specified, for example, if the original logical channel priority is 3, it can be promoted to 2; if not specified, it can be directly promoted to the highest logical channel priority 1. Optionally, a trigger condition for error of service data transmission is configured by the base station.

The terminal receives the configuration of base station for improving the logical channel priority during the priority judgement in the UE; judges that a transmission error has occurred according to the base station configuration or protocol regulations or on its own decision; and judges, in a case that an uplink resource conflict occurs, the priority of the uplink resource corresponding to the MAC PDU mapped with the logical channel data according to the promoted priority, so as to preferentially transmit the MAC PDU.

(5) The terminal receives fifth configuration information sent by the network side, and improves the priority of the data transmission for the service according to the fifth configuration information, where the fifth configuration information is used to set, in a case that the data transmission error of the service occurs in the terminal, a corresponding physical layer priority carried on a configured resource (CG) to a higher priority for the specified configured resource (CG).

In this embodiment, in a case that a plurality of uplink resource conflicts occur subsequently, the uplink resource including the logical channel data is preferentially transmitted. For the physical layer intra-UE priority scheme, the base station configuration may improve the priority parameter phy-PriorityIndex (p0 is upgraded to p1) for specified CG, when the transmission error occurs in the terminal. In this way, the transmission priority of the service carried on the CG can be improved. In a case that two or more uplink transmission resources conflict, the pre-configured resource can be transmitted preferentially by improving the physical layer priority of the pre-configured resource CG.

In an implementation example, the CG priority is improved. For a specific CG, the base station configuration can improve the physical layer priority, that is, the allowedPHY-PriorityIndex is improved to p1; optionally, a trigger condition for error of service data transmission is configured by the base station.

The terminal receives the configuration of the base station for improving CG physical layer priority; judges that a transmission error has occurred according to the base station configuration or protocol regulations or on its own decision; and performs, in a case that an uplink resource conflict occurs, a transmission on the CG resource preferentially.

(6) the terminal receives sixth configuration information sent by the network side, and improves the priority of the data transmission for the service according to the sixth configuration information, where the sixth configuration information is used to allow the terminal to improve, in a case that the data transmission error of the service occurs in the specified logical channel, a physical layer priority corresponding to the logical channel to a higher priority, and the physical layer priority is used for specifying, in a case that the uplink transmission resource transmission conflicts, to preferentially perform a transmission with higher priority.

In this embodiment, for logical channel configuration, in a case that a transmission error occurs in the terminal, the physical priority allowedPHY-PriorityIndex of the logical channel is improved, and p0 is improved to p1. In a case that two or more uplink transmission resources conflict, a dynamic scheduling resource including the logical channel data is preferentially transmitted.

In an implementation example, the mapping from logical channel to physical layer dynamic scheduling resources is relaxed. For logical channel configuration, in a case that a transmission error occurs in the terminal, the base station improves the physical priority allowedPHY-PriorityIndex of the logical channel, p0 is upgraded to p1, or stipulates that it can be mapped to any dynamic scheduling resource indicated by the physical layer scheduling signaling (i.e. as long as there are dynamic scheduling resources, it may be mapped, regardless of whether p0 or p1 is indicated). Optionally, a trigger condition for error of service data transmission is configured by the base station.

The terminal receives the configuration of the base station for relaxing the mapping from the logical channel to the dynamic scheduling resource; and judges that a transmission error has occurred according to the base station configuration or protocol regulations or on its own decision.

The data of this logical channel is preferentially transmitted on the high-priority dynamic scheduling resource. Optionally, according to the base station configuration, if the base station only allocates low-priority dynamic scheduling resource at the current moment and there is no uplink resource conflict, the logical channel data may be mapped to the low-priority dynamic scheduling resource.

(7) The terminal receives at least two sets of logical channel parameters configured by the network side for a preset logical channel, and uses, in a case that no transmission error occurs, the logical channel configuration parameter with a lower priority among the at least two sets of logical channel parameters; and uses, in a case that the data transmission error of the service occurs in the terminal, the logical channel configuration parameter with a higher priority among the at least two sets of logical channel parameters for transmission.

In this embodiment, the base station configures two sets of logical channel parameters for a specific logical channel, and in a case that a transmission error occurs in the terminal, subsequent transmission uses logical channel configuration parameter with higher priority.

In an implementation example, two sets of logical channel parameters are configured; the base station configures two sets of logical channel parameters for the specific logical channel; optionally, the base station configures a criterion for determining that a service data transmission error occurs.

The terminal receives two sets of logical channel parameters from the base station for a specific logical channel; judges that a transmission error has occurred according to the base station configuration or protocol regulations or on its own decision; and uses the logical channel parameter with a higher priority configured by the base station for subsequent data transmission.

The above-mentioned embodiments of the present disclosure provide a data communications method for survival time, so as to reduce the probability that a transmission link is unavailable, thereby improving the feasibility of overall service data transmission in the industrial Internet.

As shown in FIG. 3, embodiments of the present disclosure also provide a configuration method for data communications, which is performed by a network side. The method includes: step 31, sending configuration information to a terminal, where the configuration information is used for the terminal to improve, in a case that an error of a service data transmission occurs, a priority of a data transmission for the service according to the configuration information and a trigger condition, and to perform the data transmission for the service according to the improved priority of the data transmission for the service.

Optionally, the data transmission error of the service is determined for data in at least one of a quality of service flow (QoS flow), a radio bearer (RB), or a logical channel.

Optionally, the trigger condition is determined according to at least one of the following conditions of:
a manner stipulated in an agreement;
a manner that the terminal makes its own decisions; or
a manner configured by a network side.
Optionally, in a case that the trigger condition is determined according to the manner configured by the network side, the method further includes:
sending parameters for determining the data transmission error of the service to the terminal, where the parameters include at least one of the following:
the quantity of consecutive hybrid automatic repeat request negative acknowledgements (HARQ NACKs) occurred for logical channel data;
the quantity of radio link control packet data units (RLC PDUs) and/or the quantity of bytes indicated by radio link control automatic repeat request negative acknowledgement (RLC ARQ NACK);
the quantity of radio link control service data units (RLC SDUs) that are not successfully received or the quantity of RLC SDUs that are not successfully received within a configured time period; or
the quantity of gaps that appear after packet data convergence protocol (PDCP) is reordered; and
configuring a trigger timer, where the timer starts after the data transmission error of the service occurs, in a case that there is still the data transmission error of the service after the timer expires, it is considered that the trigger condition for improving the priority of the data transmission for the service is met.

Optionally, the sending configuration information to the terminal includes at least one of the following items:
sending first configuration information to the terminal, where the first configuration information is used for configuring a quality of service flow (QoS flow), a radio bearer (RB), or a logical channel that allows to improve the priority of the data transmission for the service;
sending second configuration information to the terminal, where the second configuration information is used to allow the terminal to improve, in a case that the data transmission error of the service occurs in a specified logical channel, a priority parameter in configuration of the logical channel to a highest priority or a specified priority;
sending third configuration information to the terminal, where the third configuration information is used to allow the terminal to ignore, in a case that the data transmission error of the service occurs in the specified logical channel, at least one of logical channel restrictions in a logical channel priority configuration of the logical channel;
sending fourth configuration information to the terminal, where the fourth configuration information is used to allow the terminal to improve, in a case that the data transmission error of the service occurs in the specified logical channel, a priority of media access control packet data unit (MAC PDU) mapped by the data in the logical channel to the highest priority or the specified priority in a subsequent transmission, when a resource conflict occurs in uplink transmissions;
sending fifth configuration information to the terminal, where the fifth configuration information is used to set, in a case that the data transmission error of the service occurs in the terminal, a physical layer priority corresponding to a specified configured resource (CG) to a higher priority for the specified configured resource (CG);
sending sixth configuration information to the terminal, where the sixth configuration information is used to allow the terminal to improve, in a case that the data transmission error of the service occurs in the specified logical channel, a physical layer priority corresponding to the logical channel to a higher priority, and the physical layer priority is used for specifying, in a case that a transmission resource conflict occurs in uplink transmissions, to preferentially perform one of the transmissions with the higher priority; or
configuring at least two sets of logical channel parameters for the terminal preset logical channel, and using, in a case that no transmission error occurs, the logical channel configuration parameter with a lower priority among the at least two sets of logical channel parameters; and using, in a case that the data transmission error of the service occurs in the terminal, the logical channel configuration parameter with a higher priority among the at least two sets of logical channel parameters for transmission.

It should be noted that the method performed by the network side is a method corresponding to the method performed by the terminal side above, and all the implementation methods in the above-mentioned method embodiments are applicable to the embodiments of the method performed by the network side, and the same technical effects can also be achieved.

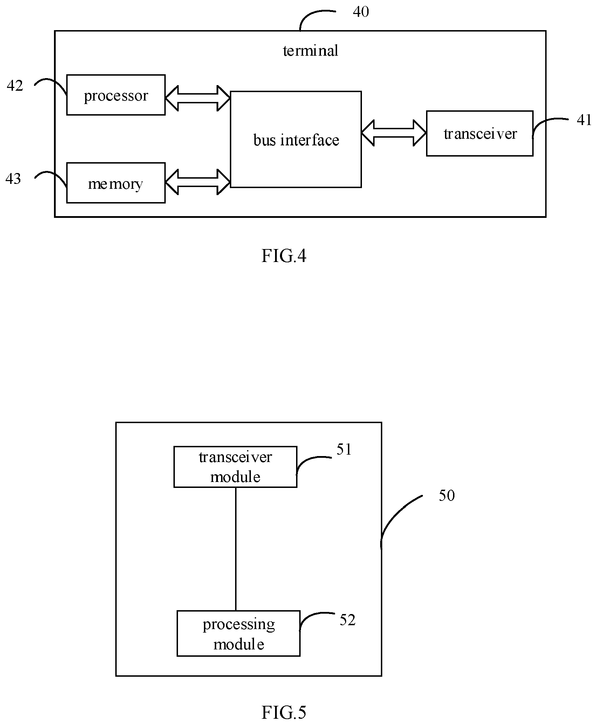

As shown in FIG. 4, embodiments of the present disclosure also provide a terminal 40, including: a transceiver 41, a processor 42, and a memory 43, where a program executable by the processor is stored in the memory 43; the processor is configured to execute the program to: improve, in a case that a data transmission error of a service occurs, a priority of a data transmission for the service according to a trigger condition; and perform the data transmission for the service according to the improved priority of the data transmission for the service.

Optionally, the data transmission error of the service is determined for data in at least one of a quality of service flow (QoS flow), a radio bearer (RB), or a logical channel.

Optionally, the data transmission error of the service is determined under at least one of the following conditions that:
physical layer hybrid automatic repeat request (HARQ) error occurs in data in at least one of a quality of service flow (QoS flow), a radio bearer (RB), or a logical channel;
radio link control automatic repeat request (RLC ARQ) error occurs; or
the terminal recognizes that all or part of segments of radio link control service data unit (RLC SDU) are not successfully received.

Optionally, the trigger condition is determined according to at least one of the following conditions of:
a manner stipulated in an agreement;
a manner that the terminal makes its own decisions; or
a manner configured by a network side.

Optionally, in a case that the trigger condition is determined according to the manner configured by the network side, where the parameters configured by the network side include at least one of the following:
the quantity of consecutive hybrid automatic repeat request negative acknowledgements (HARQ NACKs) occurred for logical channel data;
the quantity of radio link control packet data units (RLC PDUs) and/or the quantity of bytes indicated by radio link control automatic repeat request negative acknowledgement (RLC ARQ NACK);
the quantity of radio link control service data units (RLC SDUs) that are not successfully received or the quantity of RLC SDUs that are not successfully received within a configured time period; or
the quantity of gaps that appear after packet data convergence protocol (PDCP) is reordered; and
configuring a trigger timer, where the timer starts after the data transmission error of the service occurs, in a case that there is still the data transmission error of the service after the timer expires, it is considered that the trigger condition for improving the priority of the data transmission for the service is met.

Optionally, the improving the priority of the data transmission for the service includes at least one of the following items:
receiving, by the transceiver 41 of terminal, first configuration information sent by a network side, and improving the priority of the data transmission for the service according to the first configuration information, where the first configuration information is used for configuring a quality of service flow (QoS flow), a radio bearer (RB), or a logical channel that allows to improve the priority of the data transmission for the service;
receiving, by the transceiver 41 of terminal, second configuration information sent by the network side, and improving the priority of the data transmission for the service according to the second configuration information, where the second configuration information is used to allow the terminal to improve, in a case that the data transmission error of the service occurs in a specified logical channel, a priority parameter in the logical channel configuration to a highest priority or a specified priority;
receiving, by the transceiver 41 of terminal, third configuration information sent by the network side, and improving the priority of the data transmission for the service according to the third configuration information, where the third configuration information is used to allow the terminal to ignore, in a case that the data transmission error of the service occurs in the specified logical channel, at least one of logical channel restrictions in a logical channel priority configuration of the logical channel;
receiving, by the transceiver 41 of terminal, fourth configuration information sent by the network side, and improving the priority of the data transmission for the service according to the fourth configuration information, where the fourth configuration information is used to allow the terminal to improve, in a case that the data transmission error of the service occurs in the specified logical channel, a priority of media access control packet data unit (MAC PDU) mapped by the logical channel data to the highest priority or the specified priority in a subsequent transmission, in a case that a resource conflict occurs in uplink transmissions;
receiving, by the transceiver 41 of terminal, fifth configuration information sent by the network side, and improving the priority of the data transmission for the service according to the fifth configuration information, where the fifth configuration information sets, in a case that the data transmission error of the service occurs in the terminal, a corresponding physical layer priority carried on a configured resource (CG) to a higher priority for the specified configured resource (CG);
receiving, by the transceiver 41 of terminal, sixth configuration information sent by the network side, and improving the priority of the data transmission for the service according to the sixth configuration information, where the sixth configuration information is used to allow the terminal to improve, in a case that the data transmission error of the service occurs in the specified logical channel, the physical layer priority corresponding to the logical channel to the higher priority, and the physical layer priority is used for specifying, in a case that the uplink transmission resource transmission conflicts, to preferentially perform a transmission with higher priority; or
receiving, by the transceiver 41 of terminal, at least two sets of logical channel parameters configured by the network side for a preset logical channel, and using, in a case that no transmission error occurs, the logical channel configuration parameter with a lower priority among the at least two sets of logical channel parameters; and using, in a case that the data transmission error of the service occurs in the terminal, the logical channel configuration parameter with a higher priority among the at least two sets of logical channel parameters for transmission.

It should be noted that the terminal in this embodiment is a terminal corresponding to the method shown in FIG. 2 above, and the implementation methods in each of the above embodiments are applicable to this embodiment of the terminal, and can also achieve the same technical effect. What needs to be explained here is that the above-mentioned terminal provided by the embodiment of the present disclosure can implement all the method steps implemented by the above-mentioned method embodiment, and can achieve the same technical effect. The same parts and beneficial effects in this embodiment as those in the method embodiment will not be described in detail here.

As shown in FIG. 5, embodiment of the present disclosure also provide a data transmission apparatus 50, which is applied to the terminal. The apparatus 50 includes: a processing module 52, configured to improve, in a case that a data transmission error of a service occurs, a priority of a data transmission for the service according to a trigger condition; and perform the data transmission for the service according to the improved priority of the data transmission for the service.

Optionally, the data transmission error of the service is determined for data in at least one of a quality of service flow (QoS flow), a radio bearer (RB), or a logical channel.

Optionally, the data transmission error of the service is determined under at least one of the following conditions that:
physical layer hybrid automatic repeat request (HARQ) error occurs in data in at least one of a quality of service flow (QoS flow), a radio bearer (RB), or a logical channel;
radio link control automatic repeat request (RLC ARQ) error occurs; or
the terminal recognizes that all or part of segments of radio link control service data unit (RLC SDU) are not successfully received.

Optionally, the trigger condition is determined according to at least one of the following conditions of:
a manner stipulated in an agreement;
a manner that the terminal makes its own decisions; or
a manner configured by a network side.

Optionally, in a case that the trigger condition is determined according to the manner configured by the network side, the parameters configured by the network side include at least one of the following items:
the quantity of consecutive hybrid automatic repeat request negative acknowledgements (HARQ NACKs) occurred to data in a logical channel;
the quantity of radio link control packet data units (RLC PDUs) and/or the quantity of bytes indicated by radio link control automatic repeat request negative acknowledgement (RLC ARQ NACK);
the quantity of radio link control service data units (RLC SDUs) that are not successfully received or the quantity of RLC SDUs that are not successfully received within a configured time period; or
the quantity of gaps that appear after packet data convergence protocol (PDCP) is reordered; and
configuring a trigger timer, where the timer starts after the data transmission error of the service occurs, in a case that there is still the data transmission error of the service after the timer expires, it is considered that the trigger condition for improving the priority of the data transmission for the service is met.

Optionally, the improving the priority of the data transmission for the service includes at least one of the following items:
receiving, by the transceiver module 51, first configuration information sent by a network side, and improving the priority of the data transmission for the service according to the first configuration information, where the first configuration information is used for configuring a quality of service flow (QoS flow), a radio bearer (RB), or a logical channel that allows to improve the priority of the data transmission for the service;
receiving, by the transceiver module 51, second configuration information sent by the network side, and improving the priority of the data transmission for the service according to the second configuration information, where the second configuration information is used to allow the terminal to improve, in a case that the data transmission error of the service occurs in a specified logical channel, a priority parameter in the logical channel configuration to a highest priority or a specified priority;
receiving, by the transceiver module 51, third configuration information sent by the network side, and improving the priority of the data transmission for the service according to the third configuration information, where the third configuration information is used to allow the terminal to ignore, in a case that the data transmission error of the service occurs in the specified logical channel, at least one of logical channel restrictions in a logical channel priority configuration of the logical channel;
receiving, by the transceiver module 51, fourth configuration information sent by the network side, and improving the priority of the data transmission for the service according to the fourth configuration information, where the fourth configuration information is used to allow the terminal to improve, in a case that the data transmission error of the service occurs in the specified logical channel, a priority of media access control packet data unit (MAC PDU) mapped by the logical channel data to the highest priority or the specified priority in a subsequent transmission, in a case that a resource conflict occurs in uplink transmissions;
receiving, by the transceiver module 51, fifth configuration information sent by the network side, and improving the priority of the data transmission for the service according to the fifth configuration information, where the fifth configuration information sets, in a case that the data transmission error of the service occurs in the terminal, a corresponding physical layer priority carried on a configured resource (CG) to a higher priority for the specified configured resource (CG);
receiving, by the transceiver module 51, sixth configuration information sent by the network side, and improving the priority of the data transmission for the service according to the sixth configuration information, where the sixth configuration information is used to allow the terminal to improve, in a case that the data transmission error of the service occurs in the specified logical channel, the physical layer priority corresponding to the logical channel to the higher priority, and the physical layer priority is used for specifying, in a case that the uplink transmission resource transmission conflicts, to preferentially perform a transmission with higher priority; or
receiving, by the transceiver module 51, at least two sets of logical channel parameters configured by the network side for a preset logical channel, and using, in a case that no transmission error occurs, the logical channel configuration parameter with a lower priority among the at least two sets of logical channel parameters; and using, in a case that the data transmission error of the service occurs in the terminal, the logical channel configuration parameter with a higher priority among the at least two sets of logical channel parameters for transmission.

It should be noted that the apparatus in this embodiment is an apparatus corresponding to the method shown in FIG. 2 above, and the implementation methods in each of the above embodiments are applicable to this embodiment of the apparatus, and can also achieve the same technical effect. What needs to be explained here is that the above-mentioned apparatus provided by the embodiment of the present disclosure can implement all the method steps implemented by the above-mentioned method embodiment, and can achieve the same technical effect. The same parts and beneficial effects in this embodiment as those in the method embodiment will not be described in detail here.

Embodiments of the present disclosure also provide a network device, including: a transceiver, a processor, and a memory, where a program executable by the processor is stored in the memory; the processor executes the program to: send configuration information to a terminal, where the configuration information is used for increasing, in a case that an error of service data transmission occurs in the terminal, a priority of service data transmission according to the configuration information and a trigger condition; and performing the data transmission for the service according to the improved priority of the data transmission for the service.

Optionally, the data transmission error of the service is determined for data in at least one of a quality of service flow (QoS flow), a radio bearer (RB), or a logical channel.

Optionally, the trigger condition is determined according to at least one of the following conditions of:
a manner stipulated in an agreement;
a manner that the terminal makes its own decisions; or
a manner configured by a network side.

Optionally, in a case that the trigger condition is determined according to the manner configured by the network side, the transceiver is further configured to send parameters for determining the data transmission error of the service to the terminal, where the parameters include at least one of the following:
the quantity of consecutive hybrid automatic repeat request negative acknowledgements (HARQ NACKs) occurred for logical channel data;
the quantity of radio link control packet data units (RLC PDUs) and/or the quantity of bytes indicated by radio link control automatic repeat request negative acknowledgement (RLC ARQ NACK);
the quantity of radio link control service data units (RLC SDUs) that are not successfully received or the quantity of RLC SDUs that are not successfully received within a configured time period; or
the quantity of gaps that appear after packet data convergence protocol (PDCP) is reordered; and
configuring a trigger timer, where the timer starts after the data transmission error of the service occurs, in a case that there is still the data transmission error of the service after the timer expires, it is considered that the trigger condition for improving the priority of the data transmission for the service is met.

Optionally, the sending configuration information to the terminal includes at least one of the following of:
sending first configuration information to the terminal, where the first configuration information is used for configuring a quality of service flow (QoS flow), a radio bearer (RB), or a logical channel that allows to improve the priority of the data transmission for the service;
sending second configuration information to the terminal, where the second configuration information is used to allow the terminal to improve, in a case that the data transmission error of the service occurs in a specified logical channel, a priority parameter in configuration of the logical channel to a highest priority or a specified priority;
sending third configuration information to the terminal, where the third configuration information is used to allow the terminal to ignore, in a case that the data transmission error of the service occurs in the specified logical channel, at least one of logical channel restrictions in a logical channel priority configuration of the logical channel;
sending fourth configuration information to the terminal, where the fourth configuration information is used to allow the terminal to improve, in a case that the data transmission error of the service occurs in the specified logical channel, a priority of media access control packet data unit (MAC PDU) mapped by the data in the logical channel to the highest priority or the specified priority in a subsequent transmission, when a resource conflict occurs in uplink transmissions;
sending fifth configuration information to the terminal, where the fifth configuration information is used to set, in a case that the data transmission error of the service occurs in the terminal, a physical layer priority corresponding to a specified configured resource (CG) to a higher priority for the specified configured resource (CG);
sending sixth configuration information to the terminal, where the sixth configuration information is used to allow the terminal to improve, in a case that the data transmission error of the service occurs in the specified logical channel, a physical layer priority corresponding to the logical channel to a higher priority, and the physical layer priority is used for specifying, in a case that a transmission resource conflict occurs in uplink transmissions, to preferentially perform one of the transmissions with the higher priority; or
configuring at least two sets of logical channel parameters for the terminal preset logical channel, and using, in a case that no transmission error occurs, the logical channel configuration parameter with a lower priority among the at least two sets of logical channel parameters; and using, in a case that the data transmission error of the service occurs in the terminal, the logical channel configuration parameter with a higher priority among the at least two sets of logical channel parameters for transmission.

It should be noted that the network device in these embodiments is a network device corresponding to the method shown in FIG. 3 above, and the implementation methods in each of the above embodiments are applicable to this embodiment of the apparatus, and can also achieve the same technical effect. What needs to be explained here is that the above-mentioned network device provided by the embodiment of the present disclosure can implement all the method steps implemented by the above-mentioned method embodiment, and can achieve the same technical effect. The same parts and beneficial effects in this embodiment as those in the method embodiment will not be described in detail here.

An embodiment of the present disclosure also provides a configuration apparatus for data transmission, applied to a network device, where the apparatus includes:
a transceiver module, configured to send configuration information to a terminal, where the configuration information is used for the terminal to improve, in a case that a data transmission error of a service occurs, a priority of a data transmission for the service according to the configuration information and a trigger condition, and to perform the data transmission for the service according to the improved priority of the data transmission for the service.

Optionally, the data transmission error of the service is determined for data in at least one of a quality of service flow (QoS flow), a radio bearer (RB), or a logical channel.

Optionally, the trigger condition is determined according to at least one of the following conditions of:
a manner stipulated in an agreement;
a manner that the terminal makes its own decisions; or
a manner configured by a network side.

Optionally, in a case that the trigger condition is determined according to the manner configured by the network side, the transceiver is further configured to send parameters for determining the data transmission error of the service to the terminal, where the parameters include at least one of the following:
the quantity of consecutive hybrid automatic repeat request negative acknowledgements (HARQ NACKs) occurred for logical channel data;
the quantity of radio link control packet data units (RLC PDUs) and/or the quantity of bytes indicated by radio link control automatic repeat request negative acknowledgement (RLC ARQ NACK);
the quantity of radio link control service data units (RLC SDUs) that are not successfully received or the quantity of RLC SDUs that are not successfully received within a configured time period; or
the quantity of gaps that appear after packet data convergence protocol (PDCP) is reordered; and
configuring a trigger timer, where the timer starts after the data transmission error of the service occurs, in a case that there is still the data transmission error of the service after the timer expires, it is considered that the trigger condition for improving the priority of the data transmission for the service is met.

Optionally, the sending configuration information to the terminal includes at least one of the following items:
sending first configuration information to the terminal, where the first configuration information is used for configuring a quality of service flow (QoS flow), a radio bearer (RB), or a logical channel that allows to improve the priority of the data transmission for the service;
sending second configuration information to the terminal, where the second configuration information is used to allow the terminal to improve, in a case that the data transmission error of the service occurs in a specified logical channel, a priority parameter in configuration of the logical channel to a highest priority or a specified priority;
sending third configuration information to the terminal, where the third configuration information is used to allow the terminal to ignore, in a case that the data transmission error of the service occurs in the specified logical channel, at least one of logical channel restrictions in a logical channel priority configuration of the logical channel;
sending fourth configuration information to the terminal, where the fourth configuration information is used to allow the terminal to improve, in a case that the data transmission error of the service occurs in the specified logical channel, a priority of media access control packet data unit (MAC PDU) mapped by the data in the logical channel to the highest priority or the specified priority in a subsequent transmission, when a resource conflict occurs in uplink transmissions;
sending fifth configuration information to the terminal, where the fifth configuration information is used to set, in a case that the data transmission error of the service occurs in the terminal, a physical layer priority corresponding to a specified configured resource (CG) to a higher priority for the specified configured resource (CG);
sending sixth configuration information to the terminal, where the sixth configuration information is used to allow the terminal to improve, in a case that the data transmission error of the service occurs in the specified logical channel, a physical layer priority corresponding to the logical channel to a higher priority, and the physical layer priority is used for specifying, in a case that a transmission resource conflict occurs in uplink transmissions, to preferentially perform one of the transmissions with the higher priority; or
configuring at least two sets of logical channel parameters for the terminal preset logical channel, and using, in a case that no transmission error occurs, the logical channel configuration parameter with a lower priority among the at least two sets of logical channel parameters; and using, in a case that the data transmission error of the service occurs in the terminal, the logical channel configuration parameter with a higher priority among the at least two sets of logical channel parameters for transmission.

It should be noted that the apparatus in this embodiment is an apparatus corresponding to the method shown in FIG. 3 above, and the implementation methods in each of the above embodiments are applicable to this embodiment of the apparatus, and can also achieve the same technical effect. What needs to be explained here is that the above-mentioned apparatus provided by the embodiment of the present disclosure can implement all the method steps implemented by the above-mentioned method embodiment, and can achieve the same technical effect. The same parts and beneficial effects in this embodiment as those in the method embodiment will not be described in detail here.

An embodiment of the present disclosure also provides a processor-readable storage medium, where the processor-readable storage medium stores processor-executable instructions, and the processor-executable instructions are used for enabling the processor to perform the above-mentioned method, and the implementation methods in each of the above embodiments are applicable to this embodiment, and can also achieve the same technical effect.

The above-mentioned embodiments of the present disclosure can reduce the probability that a transmission link is unavailable, and can improve the feasibility of overall service data transmission in the industrial Internet.

Those ordinarily skilled in the art can appreciate that the units and algorithm steps of the examples described in conjunction with the embodiments disclosed herein can be implemented by electronic hardware, or a combination of computer software and electronic hardware. Whether these functions are executed by hardware or software depends on the specific application and design constraints of the technical solution. Skilled artisans may implement the described functionality by using different methods for each particular application, but such implementation should not be considered beyond the scope of the present disclosure.

Those skilled in the art can clearly understand that for the convenience and brevity of the description, the specific working process of the above-described system, apparatus and unit can refer to the corresponding process in the foregoing method embodiment, which will not be repeated here.

In the embodiments provided in the present disclosure, it should be understood that the disclosed apparatuses and methods may be implemented in other ways. For example, the apparatus embodiments described above are only illustrative. For example, the division of the units is only a logical function division. In actual implementation, there may be other division methods. For example, multiple units or components can be combined or may be integrated into another system, or some features may be ignored, or not implemented. In another point, the mutual coupling or direct coupling or communications connection shown or discussed may be achieved through some interfaces, and the indirect coupling or communications connection of apparatuses or units may be in electrical, mechanical or other forms.

The units described as separate components may or may not be physically separated, and the components shown as units may or may not be physical units, that is, they may be located in one place, or may be distributed to multiple network units. Part or all of the units can be selected according to actual needs to achieve the purpose of the solution of this embodiment.

In addition, each functional unit in each embodiment of the present disclosure may be integrated into one processing unit, each unit may exist separately physically, or two or more units may be integrated into one unit.

If the functions described above are realized in the form of software function units and sold or used as independent products, they can be stored in a computer-readable storage medium. Based on this understanding, the technical solution of the present disclosure is essentially or the part that contributes to the prior art or the part of the technical solution can be embodied in the form of a software product, and the computer software product is stored in a storage medium, and includes several instructions for enabling a computer device (which may be a personal computer, a server, or a network device, etc.) to execute all or part of the steps of the methods described in various embodiments of the present disclosure. The aforementioned storage medium includes: various media capable of storing program codes such as U disk, mobile hard disk, ROM, RAM, magnetic disk or optical disk.

It should be understood that the embodiments described in the present disclosure may be implemented by hardware, software, firmware, middleware, microcode or a combination thereof. For hardware implementation, modules, units, sub-modules, sub-units, etc. can be implemented in one or more application specific integrated circuits (Application Specific Integrated Circuits, ASIC), digital signal processor (Digital Signal Processing, DSP), digital signal processing device ( DSP Device, DSPD), Programmable Logic Device (Programmable Logic Device, PLD), Field-Programmable Gate Array (Field-Programmable Gate Array, FPGA), general-purpose processor, controller, microcontroller, microprocessor, and other electronic units or combinations thereof used to perform the functions described in this application.

In addition, it should be pointed out that, in the apparatus and method of the present disclosure, obviously, each component or each step can be decomposed and/or reassembled. These decompositions and/or recombinations should be considered equivalents of the present disclosure. Also, the steps for executing the above series of processes can naturally be executed in chronological order according to the illustrated order, but they are not necessarily executed in chronological order, and some steps can be executed in parallel or independently with each other. For those ordinarily skilled in the art, it can be understood that all or any steps or components of the methods and apparatuses in the present disclosure can be implemented in any computing apparatus (including processors, storage media, etc.) or networks of computing apparatuses in the form of hardware, firmware, software or a combination thereof, which can be realized by those skilled in the art by using their basic programming skills after reading the description of the present disclosure.

Therefore, the object of the present disclosure can also be achieved by running a program or a group of programs on any computing apparatuses. The computing apparatus may be a known general-purpose apparatus. Therefore, the object of the present disclosure can also be achieved only by providing a program product including program codes for realizing the method or apparatus. That is, such a program product also constitutes the present disclosure, and a storage medium storing such a program product also constitutes the present disclosure. Obviously, the storage medium may be any known storage medium or any storage medium developed in the future. It should also be pointed out that, in the apparatus and method of the present disclosure, obviously, each component or each step can be decomposed and/or reassembled. These decompositions and/or recombinations should be considered equivalents of the present disclosure. Also, the steps for performing the above-mentioned series of processes may naturally be performed in chronological order in the order described, but need not necessarily be performed in chronological order. Certain steps may be performed in parallel or independently with each other.

What have been described above are optional embodiments of the present disclosure. It should be pointed out that a person of ordinary skilled in the art can make some improvements and modifications without departing from the principles described in the present disclosure. These improvements and modifications are also described within the protection scope of the present disclosure.

## Claims

1. A data communications method, performed by a terminal, comprising:
improving, in a case that a data transmission error of a service occurs, a priority of a data transmission for the service according to a trigger condition; and
performing the data transmission for the service according to the improved priority of the data transmission for the service.

2. The data communications method according to claim 1, wherein the data transmission error of the service is determined for data in at least one of a quality of service flow (QoS flow), a radio bearer (RB), or a logical channel.

3. The data communications method according to claim 1, wherein the data transmission error of the service is determined under at least one of the following conditions that:
physical layer hybrid automatic repeat request (HARQ) error occurs in data in at least one of a quality of service flow (QoS flow), a radio bearer (RB), or a logical channel;
radio link control automatic repeat request (RLC ARQ) error occurs; or
the terminal recognizes that all or part of segments of radio link control service data unit (RLC SDU) are not successfully received.

4. The data communications method according to claim 1, wherein the trigger condition is determined according to at least one of the following conditions:
a manner stipulated in an agreement;
a manner that the terminal makes its own decisions; or
a manner configured by a network side.

5. The data communications method according to claim 1, wherein the improving the priority of the data transmission for the service comprises at least one of the following:
receiving, by the terminal, first configuration information sent by a network side, and improving the priority of the data transmission for the service according to the first configuration information, wherein the first configuration information is used for configuring a quality of service flow (QoS flow), a radio bearer (RB), or a logical channel that allows to improve the priority of the data transmission for the service;
receiving, by the terminal, second configuration information sent by the network side, and improving the priority of the data transmission for the service according to the second configuration information, wherein the second configuration information is used to allow the terminal to improve, in a case that the data transmission error of the service occurs in a specified logical channel, a priority parameter in configuration of the logical channel to a highest priority or a specified priority;
receiving, by the terminal, third configuration information sent by the network side, and improving the priority of the data transmission for the service according to the third configuration information, wherein the third configuration information is used to allow the terminal to ignore, in a case that the data transmission error of the service occurs in a specified logical channel, at least one of logical channel restrictions in a logical channel priority configuration of the logical channel;
receiving, by the terminal, fourth configuration information sent by the network side, and improving the priority of the data transmission for the service according to the fourth configuration information, wherein the fourth configuration information is used to allow the terminal to improve, in a case that the data transmission error of the service occurs in a specified logical channel, a priority of media access control packet data unit (MAC PDU) mapped by data in the logical channel to the highest priority or the specified priority in a subsequent transmission, when a resource conflict occurs in uplink transmissions;
receiving, by the terminal, fifth configuration information sent by the network side, and improving the priority of the data transmission for the service according to the fifth configuration information, wherein the fifth configuration information is used to set, in a case that the data transmission error of the service occurs in the terminal, a physical layer priority corresponding to a specified configured resource (CG) to a higher priority for the specified configured resource (CG);
receiving, by the terminal, sixth configuration information sent by the network side, and improving the priority of the data transmission for the service according to the sixth configuration information, wherein the sixth configuration information is used to allow the terminal to improve, in a case that the data transmission error of the service occurs in a specified logical channel, a physical layer priority corresponding to the logical channel to a higher priority, and the physical layer priority is used for specifying, in a case that a transmission resource conflict occurs in uplink transmissions, to preferentially perform one of the transmissions with the higher priority;
receiving, by the terminal, at least two sets of logical channel parameters configured by the network side for a preset logical channel, and using, in a case that no transmission error occurs, the logical channel configuration parameter with a lower priority among the at least two sets of logical channel parameters; and using, in a case that the data transmission error of the service occurs in the terminal, the logical channel configuration parameter with a higher priority among the at least two sets of logical channel parameters for transmission.

6. A configuration method for data communications, performed by a network side, comprising:
sending configuration information to a terminal, wherein the configuration information is used for the terminal to improve, in a case that an error of a service data transmission occurs, a priority of a data transmission for the service according to the configuration information and a trigger condition, and to perform the data transmission for the service according to the improved priority of the data transmission for the service.

7. The configuration method for data communications according to claim 6, wherein the data transmission error of the service is determined for data in at least one of a quality of service flow (QoS flow), a radio bearer (RB), or a logical channel.

8. The configuration method for data communications according to claim 6, wherein the trigger condition is determined according to at least one of the following conditions:
a manner stipulated in an agreement;
a manner that the terminal makes its own decisions; or
a manner configured by the network side.

9. The configuration method for data communications according to claim 8, wherein in a case that the trigger condition is determined according to the manner configured by the network side, the method further comprises:
sending a parameter for determining the data transmission error of the service to the terminal, wherein the parameter comprises at least one of the following:
the quantity of consecutive hybrid automatic repeat request negative acknowledgements (HARQ NACKs) occurred to data in a logical channel;
the quantity of radio link control (RLC) packet data units (PDUs) and/or the quantity of bytes indicated by a radio link control automatic repeat request negative acknowledgement (RLC ARQ NACK);
the quantity of radio link control service data units (RLC SDUs) that are not successfully received, or the quantity of RLC SDUs that are not successfully received within a configured time period; or
the quantity of gaps that appear after packet data convergence protocol (PDCP) is reordered; and
configuring a trigger timer, wherein the timer starts after the data transmission error of the service occurs, and in a case that there is still the data transmission error of the service after the timer expires, it is considered that the trigger condition for improving the priority of the data transmission for the service is met.

10. The configuration method for data communications according to claim 8, wherein the sending configuration information to the terminal comprises at least one of the following:
sending first configuration information to the terminal, wherein the first configuration information is used for configuring a quality of service flow (QoS flow), a radio bearer (RB), or a logical channel that allows to improve the priority of the data transmission for the service;
sending second configuration information to the terminal, wherein the second configuration information is used to allow the terminal to improve, in a case that the data transmission error of the service occurs in a specified logical channel, a priority parameter in configuration of the logical channel to a highest priority or a specified priority;
sending third configuration information to the terminal, wherein the third configuration information is used to allow the terminal to ignore, in a case that the data transmission error of the service occurs in the specified logical channel, at least one of logical channel restrictions in a logical channel priority configuration of the logical channel;
sending fourth configuration information to the terminal, wherein the fourth configuration information is used to allow the terminal to improve, in a case that the data transmission error of the service occurs in the specified logical channel, a priority of media access control packet data unit (MAC PDU) mapped by the data in the logical channel to the highest priority or the specified priority in a subsequent transmission, when a resource conflict occurs in uplink transmissions;
sending fifth configuration information to the terminal, wherein the fifth configuration information is used to set, in a case that the data transmission error of the service occurs in the terminal, a physical layer priority corresponding to a specified configured resource (CG) to a higher priority for the specified configured resource (CG);
sending sixth configuration information to the terminal, wherein the sixth configuration information is used to allow the terminal to improve, in a case that the data transmission error of the service occurs in the specified logical channel, a physical layer priority corresponding to the logical channel to a higher priority, and the physical layer priority is used for specifying, in a case that a transmission resource conflict occurs in uplink transmissions, to preferentially perform one of the transmissions with the higher priority; or
configuring at least two sets of logical channel parameters for the terminal preset logical channel, and using, in a case that no transmission error occurs, the logical channel configuration parameter with a lower priority among the at least two sets of logical channel parameters; and using, in a case that the data transmission error of the service occurs in the terminal, the logical channel configuration parameter with a higher priority among the at least two sets of logical channel parameters for transmission.

11. A terminal, comprising a transceiver, a processor, and a memory, wherein a program executable by the processor is stored in the memory; the processor, when executing the program, is configured to:
improve, in a case that a data transmission error of a service occurs, a priority of a data transmission for the service according to a trigger condition; and
perform the data transmission for the service according to the improved priority of the data transmission for the service.

12. The terminal according to claim 11, wherein the improving the priority of the data transmission for the service comprises at least one of the following:
receiving, by the terminal, first configuration information sent by a network side, and improving the priority of the data transmission for the service according to the first configuration information, wherein the first configuration information is used for configuring a quality of service flow (QoS flow), a radio bearer (RB), or a logical channel that allows to improve the priority of the data transmission for the service;
receiving, by the terminal, second configuration information sent by the network side, and improving the priority of the data transmission for the service according to the second configuration information, wherein the second configuration information is used to allow the terminal to improve, in a case that the data transmission error of the service occurs in a specified logical channel, a priority parameter in configuration of the logical channel to a highest priority or a specified priority;
receiving, by the terminal, third configuration information sent by the network side, and improving the priority of the data transmission for the service according to the third configuration information, wherein the third configuration information is used to allow the terminal to ignore, in a case that the data transmission error of the service occurs in a specified logical channel, at least one of logical channel restrictions in a logical channel priority configuration of the logical channel;
receiving, by the terminal, fourth configuration information sent by the network side, and improving the priority of the data transmission for the service according to the fourth configuration information, wherein the fourth configuration information is used to allow the terminal to improve, in a case that the data transmission error of the service occurs in a specified logical channel, a priority of media access control packet data unit (MAC PDU) mapped by data in the logical channel to the highest priority or the specified priority in a subsequent transmission, when a resource conflict occurs in uplink transmissions;
receiving, by the terminal, fifth configuration information sent by the network side, and improving the priority of the data transmission for the service according to the fifth configuration information, wherein the fifth configuration information is used to set, in a case that the data transmission error of the service occurs in the terminal, a physical layer priority corresponding to a specified configured resource (CG) to a higher priority for the specified configured resource (CG);
receiving, by the terminal, sixth configuration information sent by the network side, and improving the priority of the data transmission for the service according to the sixth configuration information, wherein the sixth configuration information is used to allow the terminal to improve, in a case that the data transmission error of the service occurs in a specified logical channel, a physical layer priority corresponding to the logical channel to a higher priority, and the physical layer priority is used for specifying, in a case that a transmission resource conflict occurs in uplink transmissions, to preferentially perform one of the transmissions with the higher priority;
receiving, by the terminal, at least two sets of logical channel parameters configured by the network side for a preset logical channel, and using, in a case that no transmission error occurs, the logical channel configuration parameter with a lower priority among the at least two sets of logical channel parameters; and using, in a case that the data transmission error of the service occurs in the terminal, the logical channel configuration parameter with a higher priority among the at least two sets of logical channel parameters for transmission.

13. A data transmission apparatus, applied to a terminal, comprising:
a processing module, configured to improve, in a case that a data transmission error of a service occurs, a priority of a data transmission for the service according to a trigger condition; and
a transceiver module, configured to perform the data transmission for the service according to the improved priority of the data transmission for the service.

14. The apparatus according to claim 13, wherein the improving the priority of the data transmission for the service comprises at least one of the following:
receiving, by the terminal, first configuration information sent by a network side, and improving the priority of the data transmission for the service according to the first configuration information, wherein the first configuration information is used for configuring a quality of service flow (QoS flow), a radio bearer (RB), or a logical channel that allows to improve the priority of the data transmission for the service;
receiving, by the terminal, second configuration information sent by the network side, and improving the priority of the data transmission for the service according to the second configuration information, wherein the second configuration information is used to allow the terminal to improve, in a case that the data transmission error of the service occurs in a specified logical channel, a priority parameter in configuration of the logical channel to a highest priority or a specified priority;
receiving, by the terminal, third configuration information sent by the network side, and improving the priority of the data transmission for the service according to the third configuration information, wherein the third configuration information is used to allow the terminal to ignore, in a case that the data transmission error of the service occurs in a specified logical channel, at least one of logical channel restrictions in a logical channel priority configuration of the logical channel;
receiving, by the terminal, fourth configuration information sent by the network side, and improving the priority of the data transmission for the service according to the fourth configuration information, wherein the fourth configuration information is used to allow the terminal to improve, in a case that the data transmission error of the service occurs in a specified logical channel, a priority of media access control packet data unit (MAC PDU) mapped by data in the logical channel to the highest priority or the specified priority in a subsequent transmission, when a resource conflict occurs in uplink transmissions;
receiving, by the terminal, fifth configuration information sent by the network side, and improving the priority of the data transmission for the service according to the fifth configuration information, wherein the fifth configuration information is used to set, in a case that the data transmission error of the service occurs in the terminal, a physical layer priority corresponding to a specified configured resource (CG) to a higher priority for the specified configured resource (CG);
receiving, by the terminal, sixth configuration information sent by the network side, and improving the priority of the data transmission for the service according to the sixth configuration information, wherein the sixth configuration information is used to allow the terminal to improve, in a case that the data transmission error of the service occurs in a specified logical channel, a physical layer priority corresponding to the logical channel to a higher priority, and the physical layer priority is used for specifying, in a case that a transmission resource conflict occurs in uplink transmissions, to preferentially perform one of the transmissions with the higher priority;
receiving, by the terminal, at least two sets of logical channel parameters configured by the network side for a preset logical channel, and using, in a case that no transmission error occurs, the logical channel configuration parameter with a lower priority among the at least two sets of logical channel parameters; and using, in a case that the data transmission error of the service occurs in the terminal, the logical channel configuration parameter with a higher priority among the at least two sets of logical channel parameters for transmission.

15. A network device, comprising: a transceiver, a processor, and a memory, wherein a program executable by the processor is stored in the memory; the processor, when executing the program, is configured to:
send configuration information to a terminal, wherein the configuration information is used for the terminal to improve, in a case that an error of a service data transmission occurs, a priority of a data transmission for the service according to the configuration information and a trigger condition, and to perform the data transmission for the service according to the improved priority of the data transmission for the service.

16. The network device according to claim 15, wherein the sending configuration information to the terminal comprises at least one of the following:
sending first configuration information to the terminal, wherein the first configuration information is used for configuring a quality of service flow (QoS flow), a radio bearer (RB), or a logical channel that allows to improve the priority of the data transmission for the service;
sending second configuration information to the terminal, wherein the second configuration information is used to allow the terminal to improve, in a case that the data transmission error of the service occurs in a specified logical channel, a priority parameter in configuration of the logical channel to a highest priority or a specified priority;
sending third configuration information to the terminal, wherein the third configuration information is used to allow the terminal to ignore, in a case that the data transmission error of the service occurs in the specified logical channel, at least one of logical channel restrictions in a logical channel priority configuration of the logical channel;
sending fourth configuration information to the terminal, wherein the fourth configuration information is used to allow the terminal to improve, in a case that the data transmission error of the service occurs in the specified logical channel, a priority of media access control packet data unit (MAC PDU) mapped by the data in the logical channel to the highest priority or the specified priority in a subsequent transmission, when a resource conflict occurs in uplink transmissions;
sending fifth configuration information to the terminal, wherein the fifth configuration information is used to set, in a case that the data transmission error of the service occurs in the terminal, a physical layer priority corresponding to a specified configured resource (CG) to a higher priority for the specified configured resource (CG);
sending sixth configuration information to the terminal, wherein the sixth configuration information is used to allow the terminal to improve, in a case that the data transmission error of the service occurs in the specified logical channel, a physical layer priority corresponding to the logical channel to a higher priority, and the physical layer priority is used for specifying, in a case that a transmission resource conflict occurs in uplink transmissions, to preferentially perform one of the transmissions with the higher priority; or
configuring at least two sets of logical channel parameters for the terminal preset logical channel, and using, in a case that no transmission error occurs, the logical channel configuration parameter with a lower priority among the at least two sets of logical channel parameters; and using, in a case that the data transmission error of the service occurs in the terminal, the logical channel configuration parameter with a higher priority among the at least two sets of logical channel parameters for transmission.

17. A configuration apparatus for data transmission, applied to a network device, comprising:
a transceiver module, configured to send configuration information to a terminal, wherein the configuration information is used for the terminal to improve, in a case that an error of a service data transmission occurs, a priority of a data transmission for the service according to the configuration information and a trigger condition, and to perform the data transmission for the service according to the improved priority of the data transmission for the service.

18. The apparatus according to claim 17, wherein the sending configuration information to the terminal comprises at least one of the following:
sending first configuration information to the terminal, wherein the first configuration information is used for configuring a quality of service flow (QoS flow), a radio bearer (RB), or a logical channel that allows to improve the priority of the data transmission for the service;
sending second configuration information to the terminal, wherein the second configuration information is used to allow the terminal to improve, in a case that the data transmission error of the service occurs in a specified logical channel, a priority parameter in configuration of the logical channel to a highest priority or a specified priority;
sending third configuration information to the terminal, wherein the third configuration information is used to allow the terminal to ignore, in a case that the data transmission error of the service occurs in the specified logical channel, at least one of logical channel restrictions in a logical channel priority configuration of the logical channel;
sending fourth configuration information to the terminal, wherein the fourth configuration information is used to allow the terminal to improve, in a case that the data transmission error of the service occurs in the specified logical channel, a priority of media access control packet data unit (MAC PDU) mapped by the data in the logical channel to the highest priority or the specified priority in a subsequent transmission, when a resource conflict occurs in uplink transmissions;
sending fifth configuration information to the terminal, wherein the fifth configuration information is used to set, in a case that the data transmission error of the service occurs in the terminal, a physical layer priority corresponding to a specified configured resource (CG) to a higher priority for the specified configured resource (CG);
sending sixth configuration information to the terminal, wherein the sixth configuration information is used to allow the terminal to improve, in a case that the data transmission error of the service occurs in the specified logical channel, a physical layer priority corresponding to the logical channel to a higher priority, and the physical layer priority is used for specifying, in a case that a transmission resource conflict occurs in uplink transmissions, to preferentially perform one of the transmissions with the higher priority; or
configuring at least two sets of logical channel parameters for the terminal preset logical channel, and using, in a case that no transmission error occurs, the logical channel configuration parameter with a lower priority among the at least two sets of logical channel parameters; and using, in a case that the data transmission error of the service occurs in the terminal, the logical channel configuration parameter with a higher priority among the at least two sets of logical channel parameters for transmission.

19. A processor-readable storage medium, wherein the processor-readable storage medium stores processor-executable instructions, and the processor-executable instructions are used for enabling the processor to perform the method according to any one of claims 1 to 5 or the method according to any one of claims 6 to 10.
